# EUROPEAN PATENT APPLICATION

(11) **EP 1 659 427 A1**
(43) Date of publication of application: **24.05.2006**
(21) Application number: 05025481.2
(22) Date of filing: 22.11.2005
(51) Int. Cl.: G02B 6/00, G02F 1/13357

(54) **Backlighting unit**

(30) Priority: 22.11.2004 KR 2004095902
(71) Applicant: Samsung Electronics Co., Ltd., Suwon-si, Gyeonggi-Do (KR)
(72) Inventor: Nesteranco, Dmitry, Samara 443086 (RU); Choi, Hwang-young, Dongan-gu Anyang-si Gyeonggi-do (KR); Lee, Moon-gyu Samsung Raemian Apt., Yeongtong-gu Suwon-si Gyeonggi-do (KR); Min, Jee-hong, Yongin-si Gyeonggi-do (KR)
(74) Representative: Grünecker, Kinkeldey, Stockmair & Schwanhäusser Anwaltssozietät

(57) **Abstract**

Provided is a backlight unit including at least one light source (50) emitting light, a light guide panel (60) guiding proceeding of light incident from a side surface (A) thereof, a light incident portion (65) protruding to be inclined with respect to the side surface of the light guide panel and having first (65A) and second (65B) light incident surfaces on which light is incident, and first (71) and second (75) guide members arranged to face the first and second light incident surfaces, respectively, and guiding the light emitted from the light source to be incident on each of the first and second light incident surfaces, wherein an air gap (80) is formed between each of the first and second light incident surfaces and each of the first and second guide members.

## Description

### 1. Field of the Invention

The present invention relates to an edge light type backlight unit, and more particularly, to a backlight unit having a light incident portion which is improved to narrow an incident angle of a beam emitted from a light source.

### 2. Description of the Related Art

Typically, a liquid crystal display device which is one of light receiving type flat panel displays forms an image by receiving light from the outside, not by directly emitting light for itself. Accordingly, a backlight unit for emitting light is installed on a rear surface of the liquid crystal display device. The backlight unit is used not only for the liquid crystal display device, but also for a surface light source device such as illumination signboard.

The backlight unit is classified into a direct light type and an edge light type according to the arrangement of a light source. In the direct light type backlight unit, a lamp installed just under a liquid crystal panel directly emits light toward the liquid crystal panel. In the edge light type backlight unit, a lamp installed at an edge of a light guide panel (LGP) emits light and the emitted light is transferred to the liquid crystal panel via the LGP.

The edge light type backlight unit may use a linear light source or a point light source. A typical linear light source is a cold cathode fluorescent lamp (CCFL) in which electrodes of both end portions are installed in a tube. The point light source includes a light emitting diode (LED).

The CCFL can radiate a strong white light with a high luminance and a high uniformity and enables a large-size design. However, the CCFL is disadvantageous in that it is operated by a high frequency AC signal and an operating temperature range is narrow. In the meantime, the performance of the LED is deteriorated in the luminance and uniformity, compared to the CCFL. However, the LED is advantageous in that it is operated by a DC signal, has a long life span, has a wide operating temperature range, and can be made compact.

The LGP which is used in the edge light type backlight unit converts a light emitted from a light source and input through an edge of the liquid crystal panel to a surface light to be output in a vertical direction. A dispersion pattern or a hologram pattern to convert the light output from the light source to the surface light is formed on the LGP in a print method or mechanical processing method.

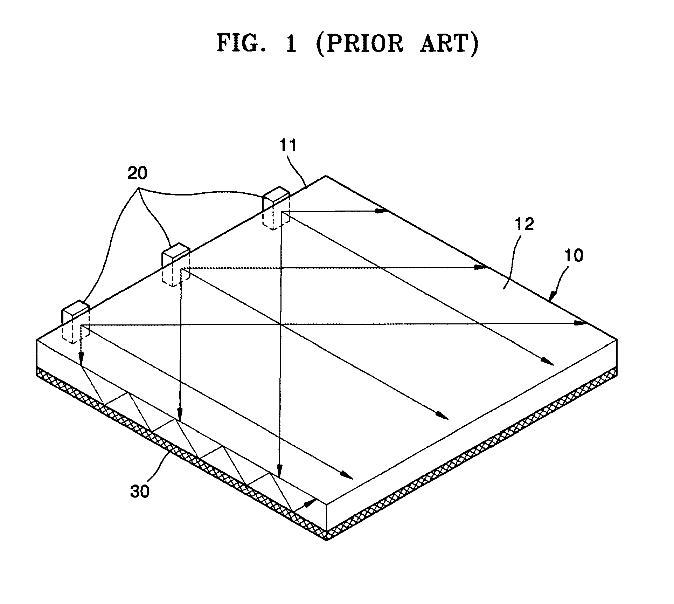

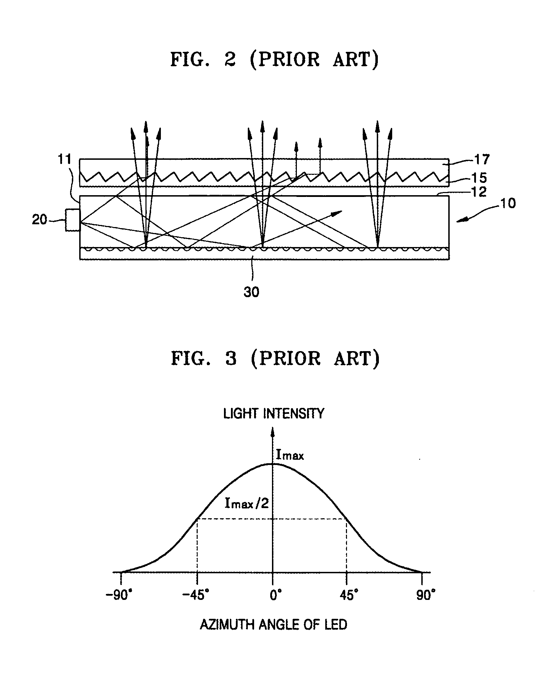

FIG. 1 is a perspective view of a conventional edge light type backlight unit using a point light source. FIG. 2 is a cross-sectional view of the edge light type backlight unit of FIG. 1. FIG. 3 is a graph showing an azimuth angle of the LED.

Referring to FIGS. 1, 2, and 3, three LEDs 20 are installed at an edge 11 of the LGP 10 as a point light source. A hologram pattern 30 for allowing light output from the LEDs 20 to proceed toward a light output surface 12 is formed on a lower surface of the LGP 10. The LEDs 20 emit light toward the edge 11 of the LGP 10. Since the LEDs 20 are the point light source, as shown in FIG. 3, each LED emits light in an azimuth angle of ±90° with respect to an optical axis. An azimuth angle at which a light having intensity corresponding to half of the maximum value Imax of the light intensity is emitted is referred to as a half-power angle. The half-power angle of the LED is normally about ±45°.

The lights emitted from the LEDs 20 are input to the LGP 10 through the edge 11. The hologram pattern 30 having a diffractive grating structure converts an incident light to a surface light and allows the light to proceed toward the light output surface 12 which is an upper surface of the LGP 10. The hologram pattern 30 has a particular orientation.

Also, as an incident azimuth angle distribution of the light incident on the hologram pattern 30 decreases, a uniform luminance can be obtained at the light output surface 12. When the luminance of the light output surface 12 is not uniform, a screen appears to be smeared. A change of about 0.9 in luminance is detected as a smear in a narrow range of about 1 cm. When the luminance change is gradually generated from the center portion of a screen to the edge thereof, even if the luminance change is 0.8, luminance smear is not detected. Thus, a luminance uniformity of at least 0.8 is required and, to obtain a high quality image, a luminance uniformity of 0.9 or more is required.

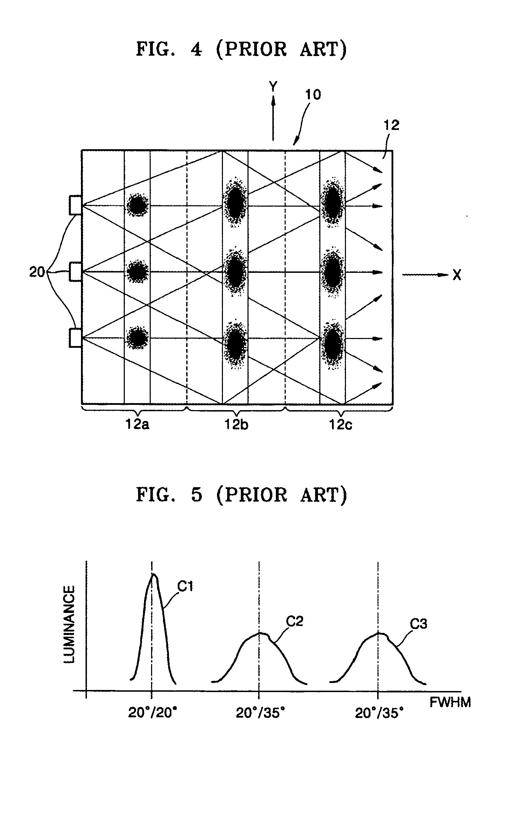

FIG. 4 is a plan view of the edge light type backlight unit of FIG. 1, which shows the distribution of the light emitted through the light output surface 12 of the LGP 10. Referring to FIG. 4, the light output surface 12 is divided into three regions: a light incident portion 12a, a central portion 12b, and a large light portion 12c in order from the edge 11 where the LEDs 20 are installed. The distribution of output light emitted from the respective regions 12a, 12b, and 12c is the same as that shown in FIG. 4. That is, the central portion 12b and the large light portion 12c have a wider light output distribution, compared to the light incident portion 12a.

FIG. 5 is a graph showing the luminance of the light emitted from each of the regions of FIG. 4. The vertical axis denotes luminance while the horizontal axis denotes a light output angle presented with a full width half maximum (FWHM). Three curves C1, C2, and C3 indicate the luminance of the light incident portion 12a, the central portion 12b, and the large light portion 12c, respectively. Referring to FIG. 5, it can be seen that the luminance at the light incident portion 12a is greater than those of the central portion 12b and the large light portion 12c. Also, it can be seen that the FWHM of 20°/20° at the light incident portion 12a increases to 20°/35° at the central portion 12b and the large light portion 12c. In the indication of the FWHM, the values before and after a sign "/" denote the FWHM in the X direction and the FWHM in the Y direction in FIG. 4, respectively.

The difference in luminance in the respective regions results from the distribution of the incident azimuth angle of the light incident on the hologram pattern 30 at the central portion 12b or the large light portion 12c is greater than that at the light incident portion 12a. This is because, at the central portion 12b or the large light portion 12c, the light is input to the hologram pattern 30 with various incident azimuth angles after being reflected several times as shown in FIG. 2. This irregularity in luminance becomes severe as the incident azimuth angle of the light emitted from the LEDs 20 and input to the LGP 10 increases.

### SUMMARY OF THE INVENTION

To solve the above and/or other problems, the present invention provides an edge light type backlight unit which can improve uniformity in luminance of the light output surface by decreasing an azimuth angle of the light emitted from the light source and input to the LGP.

According to an aspect of the present invention, a backlight unit comprises at least one light source emitting light, a light guide panel guiding proceeding of light incident from a side surface thereof, a light incident portion protruding to be inclined with respect to the side surface of the light guide panel and having first and second light incident surfaces on which light is incident, and first and second guide members arranged to face the first and second light incident surfaces, respectively, and guiding the light emitted from the light source to be incident on each of the first and second light incident surfaces, wherein an air gap is formed between each of the first and second light incident surfaces and each of the first and second guide members.

According to another aspect of the present invention, a backlight unit comprises at least one light source emitting light, a light guide panel guiding proceeding of light incident from a side surface thereof, a light incident portion protruding to be inclined with respect to the side surface of the light guide panel and having first and second light incident surfaces arranged to be separated a predetermined distance from each other, and a guide portion integrally formed with the light incident portion via a connection portion between the first and second light incident surfaces, arranged to face each other by being separated a predetermined air gap with respect to each of the first and second light incident surfaces, and guiding the light emitted from the light source to be incident on the light guide panel.

According to yet another aspect of the present invention, a backlight unit comprises at least one light source emitting light, a light guide panel guiding proceeding of light incident from a side surface thereof, a light incident portion protruding to be inclined with respect to the side surface of the light guide panel and having first and second light incident surfaces arranged to be separated a predetermined distance from each other, a guide portion integrally formed with the light incident portion and arranged to face each of the first and second light incident surfaces by being separated a predetermined distance therefrom, and guiding the light emitted from the light source to be incident on the light guide panel, and first and second reflective members, each having a first reflective portion formed on an outer side of the guide portion and a second reflective portion disposed on an outer side of a gap between each of the first and second light incident surfaces and the guide portion.

### BRIEF DESCRIPTION OF THE DRAWINGS

The above and other features and advantages of the present invention will become more apparent by describing in detail preferred embodiments thereof with reference to the attached drawings in which:
FIG. 1 is a perspective view of a conventional edge light type backlight unit using a point light source;
FIG. 2 is a cross-sectional view of the edge light type backlight unit of FIG. 1;
FIG. 3 is a graph showing an azimuth angle of the LED;
FIG. 4 is a plan view of the edge light type backlight unit of FIG. 1, showing the distribution of the light emitted through the light output surface 12 of the LGP 10;
FIG. 5 is a graph showing the luminance of the light emitted from each of the regions of FIG. 4;
FIG. 6 is a perspective view of a backlight unit according to a first preferred embodiment of the present invention;
FIG. 7 is a perspective view illustrating a part of the backlight unit of FIG. 6;
FIG. 8 is a plan view of the part of the backlight unit of FIG. 6;
FIG. 9 is a perspective view illustrating a part of a backlight unit according to a second preferred embodiment of the present invention;
FIG. 10 is a plan view of the part of the backlight unit of FIG. 9;
FIG. 11 a perspective view illustrating a part of a backlight unit according to a third preferred embodiment of the present invention;
FIG. 12 is a plan view of the part of the backlight unit of FIG. 11;
FIGS. 13A through 13D are images showing a collimating performance of the backlight units according the first through third preferred embodiments of the present invention and a comparative example; and
FIGS. 14A and 14B are graphs showing the uniformity of the comparative example and the backlight units according to the third embodiment of the present invention.

### DETAILED DESCRIPTION OF THE INVENTION

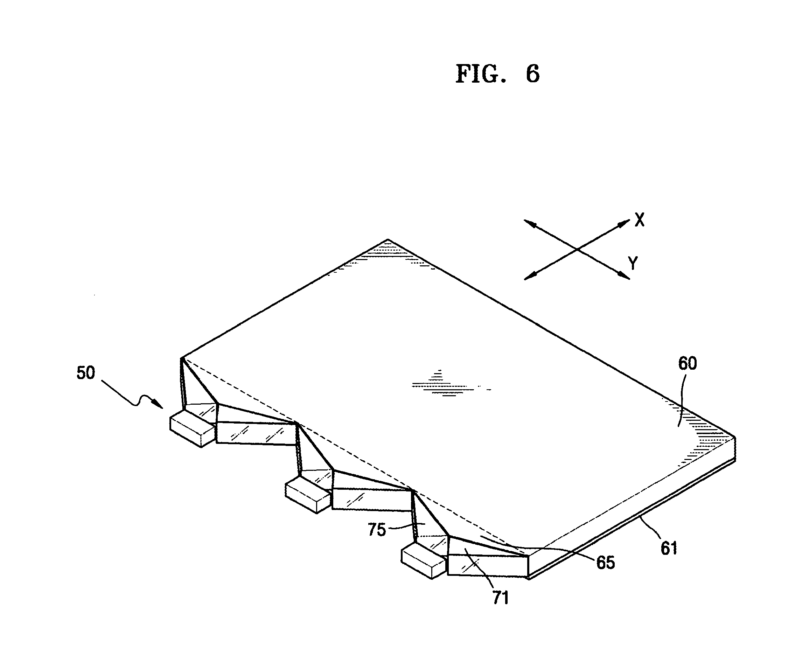

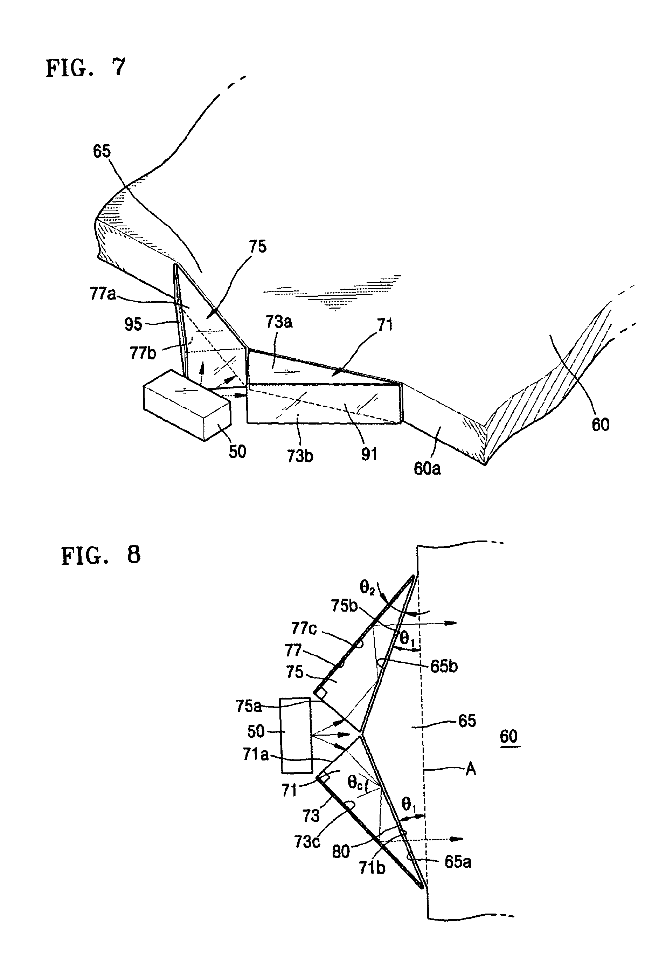

FIG. 6 is a perspective view of a backlight unit according to a first preferred embodiment of the present invention. FIGS. 7 and 8 are a perspective view and a plan view of a part of the backlight unit of FIG. 6, respectively.

Referring to FIGS. 6, 7, and 8, a backlight unit according to a first embodiment of the present invention includes at least one light source 50, a light guide panel 60 for guiding proceeding of light incident from one side surface, a light incident portion 65 provided at a side surface of the light guide panel 60, and first and second guide members 71 and 75 provided between the light incident portion 65 and the light source 50.

The light source 50 may be a point light source such as an LED or a linear light source such as a CCFL and emits light to a side surface of the light guide panel 60. FIG. 6 shows an example in which three LEDs are used as the light source 50. in this case, the light source 50, the light incident portion 65, and the first and second guide members 71 and 75 are provided to correspond to each of the LEDs. The LED emits light in a range of an azimuth angle of ±90° with respect to an optical axis thereof. The FWHM of the LED is about ±45° as shown in FIG. 3.

Although in the present embodiment three light sources 50 are installed at a side of the light guide panel 60, the present invention is not limited thereto and other number of light sources can be used. That is, the number of the light sources 50 is dependent on the size of the light guide panel 60 and a required luminance so that more or less number of the light sources 50 than three can be provided.

The light guide panel 60 guides proceeding of the light incident from a side surface 60a and is formed of a transparent material which can transmit an incident light. The light guide panel 60 is mainly formed of acryl-based transparent resin, for example, polymethylmeta acrylate (PMMA) having a refractive index of about 1.49 and a specific gravity of about 1.19 or olefin-based transparent resin having a specific gravity of 1.0 for light weight. The light guide panel 60 has a flat panel structure having a thickness of about 2 through 3 mm. Also, a taper structure can be used in which the thickness gradually decreases as the light guide panel 60 is far from the light incident surface. The size of the light output surface of the light guide panel 60 is determined by the size of a flat surface of an image display device to which the light guide panel 60 is adopted.

A hologram pattern 61 for diffracting the light incident from a side surface thereof to proceed toward the light output surface can be formed on a lower surface of the light guide panel 60. The hologram pattern 61 is formed by repeatedly arranging a plurality of diffractive gratings having a period of 2 µm or less. For example, the hologram pattern 61 can have a structure in which a plurality of diffractive gratings having a period of 0.4 µm and a depth of 0.2 µm are repeatedly arranged. A reflection member (not shown) for reflecting the light upward can be installed under the hologram pattern 61. The luminance of light at the light output surface of the light guide panel 60 becomes uniform as the azimuth angle of the light incident on the hologram pattern 61 decreases and the distribution of the azimuth angel is uniform.

The light incident portion 65 and the first and second guide members 71 and 75 condense the light emitted from the light source 50 and input to the light guide panel 60 to decrease the azimuth angle of the light in the light guide panel 60. The light incident portion 65 is formed of the same material as that of the light guide panel 60 which has the same refractive index. Alternatively, the light incident portion 65 is integrally formed with the light guide panel 60.

For this purpose, the light incident portion 65 protrudes to be inclined with respect to the side surface 60a on which the light of the light guide panel 60 is incident and has first and second light incident surfaces 65a and 65b. An angle θ₁ between a segment A extended from the side surface 60a of the light guide panel 60 where the light incident portion 65 is formed and each of the first and second light incident surfaces 65a and 65b is about 21°. The angle is set considering the proceeding direction of the light reflected by the first and second guide members 71 and 75 to condense the light incident from the light incident portion 65.

The first and second guide members 71 and 75 are arranged to face the first and second light incident surfaces 65a and 65b, respectively, and guide the light emitted from the light source 50 to be incident on the first and second light incident surfaces 65a and 65b. An air gap 80 is formed between the first guide member 71 and the first light incident surface 65a and between the second guide member 75 and the second light incident portion 65b. The air gap 80 is formed at a boundary surface between two facing members, that is, the first guide member 71 and the first light incident surface 65a, and the second guide member 75 and the second light incident portion 65b, which are arranged to contact each other without using an adhesive. When the air gap 80 is formed, the refractive indexes of the first and second guide members 71 and 75 are greater than that of air in the air gap 80. Thus, the light incident on surfaces facing the air gap 80 in the first and second guide members 71 and 75 at an angle greater than a critical angle θ_{c} is totally reflected. The proceeding direction of the light can be guided by using this property.

The first and second guide members 71 and 75 include light incident surfaces 71 a and 75a installed to face the light source 50, reflective surfaces 73 and 77, and light exit surfaces 71 b and 75b. The light exit surfaces 71 b and 75b are arranged to face the first and second light incident surfaces 65a and 65b, respectively. The light emitted from the light source 50 passes through the light incident surfaces 71 a and 75a and propagates in each of the first and second guide members 71 and 75. The reflective surfaces 73 and 77 reflect incident light to proceed toward the first and second light incident surfaces 65a and 65b. The light exit surfaces 71 b and 75b reflect the light directly incident from the light incident surfaces 71 a and 75a and output the light passing through the reflective surfaces 73 and 77 toward the light incident portion 65.

The reflective surfaces 73 and 77 include upper reflective surfaces 73a and 77a and lower reflective surfaces 73b and 77b, which are arranged to be separated a predetermined distance from each other and face each other, and rear reflective surfaces 73c and 77c arranged to be inclined with respect to the light exit surfaces 71 b and 75b.

The interval between the respective upper reflective surfaces 73a and 77a and the respective lower reflective surfaces 73b and 77b is substantially the same as the thickness of the light guide panel 60. One side of each of the rear reflective surfaces 73c and 77c contacts each of the light incident surfaces 71 a and 75a while the other side thereof contacts each of the light exit surfaces 71 b and 75b.

Reflective members 91 and 95 are further provided on outer sides of the rear reflective surfaces 73c and 77c. The reflective members 91 and 95 reflect the incident light in the first and second guide members 71 and 75. By further providing the reflective members 91 and 95, the light incident on the rear reflective surfaces 73c and 77c in the first and second guide members 71 and 75 can be totally reflected toward the light incident portion 65 regardless of an incident angle thereof. To this end, an angle θ₂ between each of the rear reflective surfaces 73c and 77c and each of the light exit surfaces 71 b and 75b is about 21 °.

When the angles θ₁ and θ₂ are set to be less than a predetermined value, the light proceeding to the light guide panel 60 is divergent so that a radiation angle increases. When the angles θ₁ and θ₂ are set to be greater than the predetermined value, the light reflected from the rear reflective surfaces 73c and 77c are reflected back to the light source 50 so that a light efficiency is lowered.

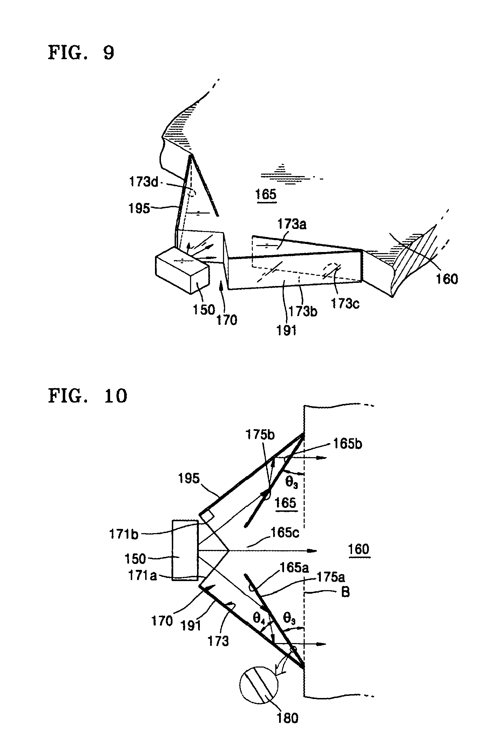

FIGS. 9 and 10 are a perspective view and a plan view illustrating major parts of a backlight unit according to a second embodiment of the present invention. Referring to FIGS. 9 and 10, a backlight unit according to the second embodiment of the present invention includes at least one light source 150, a light guide panel 160 for guiding proceeding of the light incident on one side surface thereof, a light incident portion 165 provided at one side surface of the light guide panel 160, and a guide portion 170 provided between the light incident portion 165 and the light source 150.

The light source 150 is a point light source such as an LED or a linear light source such as a CCFL which emits light to one side surface of the light guide panel 160. The light guide panel 160 guides proceeding of the incident light. Since the light source 150 and the light guide panel 160 are substantially the same as the light source 50 of FIG. 7 and the light guide panel 60 of FIG. 7 according to the first embodiment of the present invention, detailed descriptions thereof will be omitted herein. A hologram pattern (not shown) for diffracting light incident from the side surface hereof to proceed toward a light exit surface can be formed on a lower surface of the light guide panel 160.

The light incident portion 165 and the guide portion 170 condense the light emitted from the light source 150 and incident on the light guide panel 160 to decrease an azimuth angle of the light in the light guide panel 160.

To this end, the light incident portion 165 protrudes to be inclined with respect to one side of the light guide panel 160 on which light is incident and has first and second light incident surfaces 165a and 165b which are arranged to be separated a predetermined distance from each other. An angle θ₃ between a segment B extended from the side surface of the light guide panel 160 where the light incident portion 165 is formed and each of the first and second light incident surfaces 165a and 165b is about 32°. The angle is set considering the proceeding direction of the light reflected by the guide portion 170 so that the light incident on the light incident portion 165 is focused.

The guide portion 170 is integrally formed with the light incident portion 165 through a connection portion 165c between the first light incident surface 165a and the second light incident surface 165b. The guide portion 170 is separated a predetermined distance as wide as an air gap 180 from each of the first and second light incident surfaces 165a and 165b to face each other. The guide portion 170 configured as above guides the light emitted from the light source 150 to be incident on each of the first and second light incident surfaces 165a and 165b. The air gap 180 is formed at a boundary surface between two facing members when the guide portion 170 and each of the first and second light incident surfaces 165a and 165b are arranged to contact each other without using an additional adhesive. When the air gap 180 is formed as above, the refractive index of the guide member 170 is greater than that of air in the air gap 180. Thus, the light incident on a surface of the guide member 170 facing the air gap 180 at an angle greater than a critical angle is totally reflected. Thus, by reflecting the light incident at an angle greater than the critical angle, an efficiency of use of light can be improved.

The guide portion 170 includes first and second incident surfaces 171 a and 171 b installed to face the light source 150, a reflective surface 173, and first and second light exit surfaces 175a and 175b. The first and second light exit surfaces 175a and 175b are arranged to face the first and second light incident surfaces 165a and 165b, respectively. The light emitted from the light source 150 passes through the first and second light incident surfaces 171 a and 171 b and propagates in the guide portion 170. The reflective surface 173 reflects the incident light to proceed toward the first and second light incident surfaces 165a and 165b. The first and second light exit surface 175a and 175b reflect the light directly incident from the first and second light incident surfaces 171 a and 171 b and output the light incident via the reflection surface 173 toward the light incident portion 165. That is, the light directly incident from the first and second light incident surfaces 171 a and 171 b, which are incident at an angle greater than the critical angle with respect to each of the first and second light exit surfaces 175a and 175b, are totally reflected by the first and second light exit surfaces 175a and 175b due to a difference in the refractive index between the air gap 180 and the guide portion 170.

The reflective surface 173 includes an upper reflective surface 173a and a lower reflective surface 173b, which are arranged to be separated a predetermined distance from each other and face each other, and first and second rear reflective surfaces 173c and 173d arranged to be inclined with respect to the light exit surfaces 175a and 175b, respectively.

The interval between the upper reflective surface 173a and the lower reflective surface 173b is substantially the same as the thickness of the light guide panel 160. One side of each of the first and second rear reflective surfaces 173c and 173d contacts each of the first and second light incident surfaces 171 a and 171 b while the other side thereof contacts each of the first and second light exit surfaces 175a and 175b.

First and second reflective members 191 and 195 for reflecting the light incident from the inside of the guide portion 170 are further provided on outer sides of the first and second rear reflective surfaces 173c and 173d, respectively.

Assuming that an angle between the first rear reflective surface 173c and the first light exit surface 175a, and the second rear reflective surface 173d and the second light exit surface 175b is θ₄, the angle θ₄ is about 19°.

When the angles θ₃ and θ₄ are set to be greatly out of set values, the light incident on the light guide panel 160 is divergent or the light reflected by the first and second rear reflective surfaces 173c and 173d are reflected back to the light source 150.

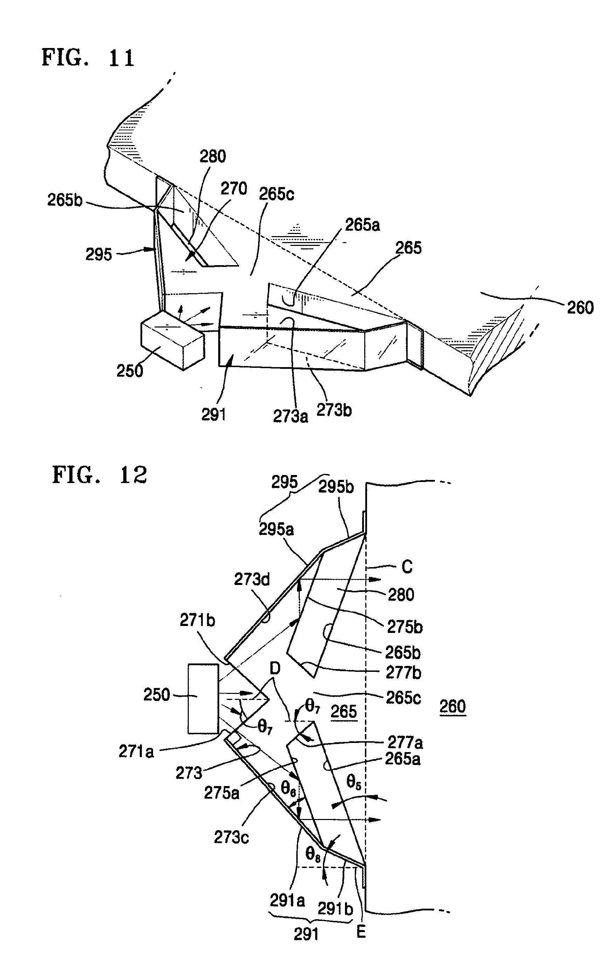

FIGS. 11 and 12 are a perspective view and a plan view illustrating major parts of a backlight unit according to a third embodiment of the present invention. Referring to FIGS. 11 and 12, a backlight unit according to the third embodiment of the present invention includes at least one light source 250, a light guide panel 260 for guiding proceeding of the light incident on one side surface thereof, a light incident portion 265 provided at one side surface of the light guide panel 260, a guide portion 270 provided between the light incident portion 265 and the light source 250, and first and second reflective members 291 and 295 provided around the guide portion 270 and the light incident portion 265. Since the light source 250 and the light guide panel 260 are substantially the same as the light source 50 of FIG. 7 and the light guide panel 60 of FIG. 7 according to the first embodiment of the present invention, respectively, detailed descriptions thereof will be omitted herein.

The light incident portion 265 and the guide portion 270 condense the light emitted from the light source 250 and incident on the light guide panel 260 to decrease an azimuth angle of the light in the light guide panel 260.

To this end, the light incident portion 265 protrudes to be inclined with respect to one side of the light guide panel 260 on which light is incident and has first and second light incident surfaces 265a and 265b which are arranged to be separated a predetermined distance from each other. An angle θ₅ between a segment C extended from the side surface of the light guide panel 260 where the light incident portion 265 is formed and each of the first and second light incident surfaces 265a and 265b is about 20°. The angle is set considering the proceeding direction of the light reflected by the guide portion 270 so that the light incident on the light incident portion 265 is focused.

The guide portion 270 is integrally formed with the light incident portion 265 through a connection portion 265c between the first light incident surface 265a and the second light incident surface 265b. The guide portion 270 is separated a predetermined distance from each of the first and second light incident surfaces 265a and 265b to face each other. The guide portion 270 configured as above guides the light emitted from the light source 250 to be incident on each of the first and second light incident surfaces 265a and 265b. When the light guide panel 260 and the guide portion 270 are integrally manufactured, to facilitate formation of an air gap 280, the air gap 280 is sufficiently separated as shown in FIGS.11 and 12.

The guide portion 270 includes first and second incident surfaces 271 a and 271 b installed to face the light source 250, a reflective surface 273, and light exit surfaces 275a and 275b, and first and second support surfaces 277a and 277b. The light exit surfaces 275a and 275b are arranged to face the first and second light incident surfaces 265a and 265b, respectively. The light emitted from the light source 250 passes through the first and second light incident surfaces 271 a and 271 b and propagates in the guide portion 170. The reflective surface 273 converts the proceeding direction of the incident light to proceed toward the first and second light incident surfaces 265a and 265b.

The first and second light exit surface 275a and 275b reflect the light directly incident from the first and second light incident surfaces 271 a and 271 b and output the light incident via the reflection surface 273 toward the light incident portion 265. That is, the light directly incident from the first and second light incident surfaces 271 a and 271 b, which are incident at an angle greater than the critical angle with respect to each of the first and second light exit surfaces 275a and 275b, are totally reflected by the first and second light exit surfaces 275a and 275b due to a difference in the refractive index between the air gap 280 and the guide portion 270.

The first and second support surfaces 277a and 277b are arranged in parallel with the first and second light incident surfaces 271 a and 271 b and connect an end portion of each of the first and second light incident surfaces 265a and 265b and an end portion of each of the first and second light exit surfaces 275a and 275b.

The reflective surface 273 includes an upper reflective surface 273a and a lower reflective surface 273b, which are arranged to be separated a predetermined distance from each other and face each other, and first and second rear reflective surfaces 273c and 273d arranged to be inclined with respect to the light exit surfaces 275a and 275b, respectively.

One side of each of the first and second rear reflective surfaces 273c and 273d contacts each of the first and second light incident surfaces 271 a and 271 b while the other side thereof contacts each of the first and second light exit surfaces 275a and 275b. Assuming that an angle between the first rear reflective surface 273c and the first light exit surface 275a, and the second rear reflective surface 273d and the second light exit surface 275b is θ₆, the angle θ₆ is about 22°.

Also, an angle between a segment D orthogonal to the segment C and the first light incident surface 271 a is the same as a angle between the segment D and the first support surface 277a. Assuming that the angle is θ₇, the angle θ₇ is about 42°. That is, the angle between the first light incident surface 271 a and the second light incident surface 271 b is about 84° which is twice the angle θ₇.

The first and second reflective members 291 and 295 include first reflective portions 291 a and 295a formed on an outer side of the guide member 270, that is, an outer surface of each of the first and second rear reflective surfaces 273c and 273d, and second reflective portions 291 b and 295b disposed at an outside of the air gap 280, respectively. The first and second reflective members 291 and 295 prevent the light incident from the inside of the guide portion 270 and the light passing through the air gap 280 from being out of a predetermined radiation angle.

Assuming that the angle between a segment E orthogonal to the segment C and the second reflective portions 291 b and 295b is θ₈, the angle θ₈ is about 24°.

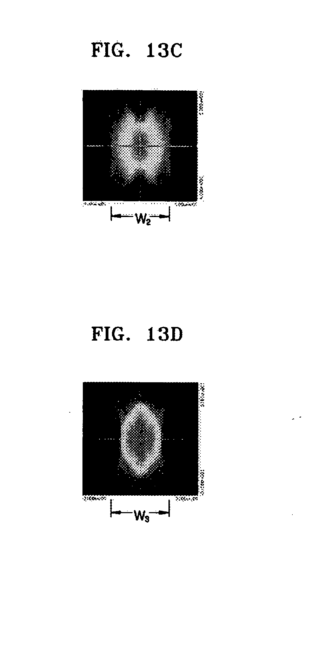

The angles θ₅, θ₆, θ₇, and θ₈ are set such that the radiation angle of the light incident on the light guide panel 260 does not decrease as shown in FIG. 13D and the light emitted from the light source 250 is not reflected back.

FIGS. 13A through 13D are images showing a collimating performance of the backlight units according to a comparative example and the first through third preferred embodiments of the present invention, respectively.

Referring to FIG. 13A, in the shape of a section of the light emitted from the backlight unit, a backlight unit according to a comparative example has a circular beam profile in which the width W in the horizontal direction is similar to the width in the vertical direction.

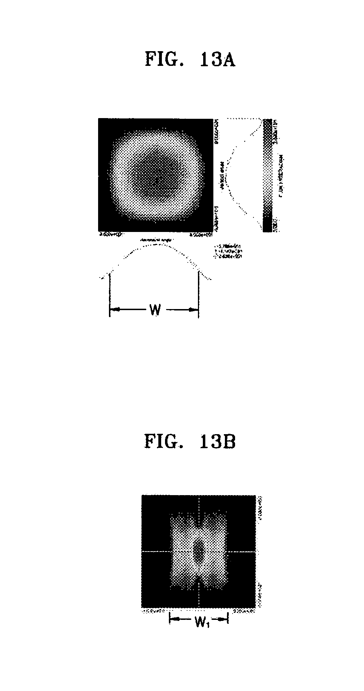

Referring to FIGS. 13B, 13C, and 13D, in the backlight units according to the first through third embodiments of the present invention, the width in the horizontal direction is narrower than that in the vertical direction. The widths W₁, W₂, and W₃ in the horizontal direction are less than the width W of the comparative example. Thus, the collimating performance of the light emitted to a display via the light guide panel is improved so that an azimuth angle of the light transmitted by the light guide panel can be decreased.

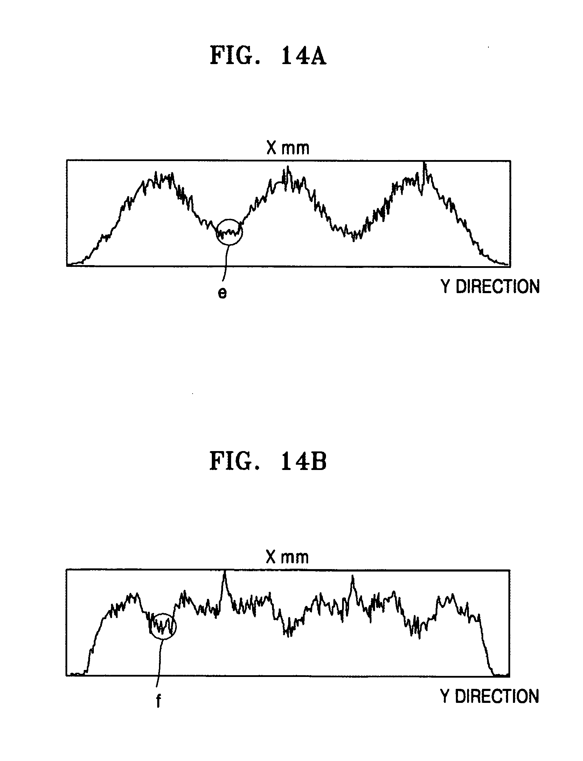

FIGS. 14A and 14B are graphs showing the uniformity of the comparative example and the backlight units according to the third embodiment of the present invention, respectively. In the drawings, a case having three light sources and light incident portions are shown as an example.

Referring to FIGS. 14A, the light emitted from each of the light sources has a Gaussian distribution and the intensity of the light is remarkably reduced at a region E which is a boundary between the respective light profiles.

Referring to FIG. 14B, in the light emitted from the backlight unit according to the third embodiment of the present invention, although the intensity of the light is reduced at a boundary region F, since the light intensity is greater than that of the comparative example, the uniformity of the light is improved.

As described above, as the azimuth angle of the light incident on the light guide panel 60 decreases, since the light is incident on the hologram pattern 61 at an angle close to 90°, light can be output with a high efficiency. Also, since the distribution of an azimuth angle of the light incident on the hologram pattern 61 becomes uniform, the distribution of an azimuth angle of the light output from the light guide panel 60 is uniform so that the uniformity of luminance is improved.

As described above, in the backlight unit configured as above according to the present invention, by decreasing the distribution of an azimuth angle of the light incident on the light guide panel, the efficiency of light output to a display device can be improved. Furthermore, since the distribution of the intensity of the output light becomes uniform, the uniformity in luminance on the light exit surface can be improved.

While this invention has been particularly shown and described with reference to preferred embodiments thereof, it will be understood by those skilled in the art that various changes in form and details may be made therein without departing from the spirit and scope of the invention as defined by the appended claims.

## Claims

1. A backlight unit comprising:
at least one light source (50, 150, 250) emitting light;
a light guide panel (60, 160, 260) guiding proceeding of light incident from a side surface (60a) thereof;
a light incident portion (65, 165, 265) protruding to be inclined with respect to the side surface (60a) of the light guide panel (60, 160, 260) and having first and second light incident surfaces (65a, 65b; 165a, 165b; 265a, 265b) on which light is incident; and
a guide portion (71, 75; 170; 270) arranged to face the first and second light incident surfaces (65a, 65b; 165a, 165b; 265a, 265b) of the light incident portion (65, 165, 265), respectively, and guiding the light emitted from the light source (50, 150, 250) to be incident on each of the first and second light incident surfaces (65a, 65b; 165a, 165b; 265a, 265b) of the light incident portion (65, 165, 265),
wherein a predetermined air gap (80, 180, 280) is formed between the light guide portion (71, 75; 170; 270) and each of the first and second light incident surfaces (65a, 65b; 165a, 165b; 265a, 265b) of the light incident portion of the light incident portion (65, 165, 265).

2. The backlight unit as claimed in claim 1, wherein the guide portion comprises:
first and second guide members (71, 75), and
wherein the predetermined air gap (80) is formed between the first light incident surface (65a) of the light incident portion (65) and the first guide member (71) and between the second light incident surface (65b) of the light incident portion (65) and the second guide member (75).

3. The backlight unit as claimed in claim 2, wherein an angle (θ₁) between a segment (A) extended from a side surface (60a) of the light guide panel (60) where the light incident portion (65) is formed and each of the first and second light incident surfaces (65a, 65b) of the light incident portion (65) is substantially 21°.

4. The backlight unit as claimed in claim 2, wherein each of the first and second guide members (71, 75) comprises:
a light incident surface (71 a, 75a) on which the light emitted from the light source (50) is incident;
a reflective surface (73, 77) converting a proceeding direction of an incident light to proceed toward the first or second light incident surface (65a, 65b) of the light incident portion (65); and
a light exit surface (71 b, 75b) arranged to face each of the first and second light incident surfaces (65a, 65b) of the light incident portion (65) and reflecting light directly incident from the light incident surface (71 a, 75a) of the guide member (71, 75) and outputting light incident via the reflective surface (73, 77) toward the light incident portion (65a, 65b).

5. The backlight unit as claimed in claim 4, wherein the reflective surface (73, 77) comprises:
upper and lower reflective surfaces (73a, 77a; 73b, 77b) arranged to be separated a predetermined distance from each other and face each other; and
a rear reflective surface (73c, 77c) arranged to be inclined with respect to the light exit surface (71 b, 75b).

6. The backlight unit as claimed in claim 5, further comprising a reflective member (91, 95) formed on an outer side of the rear reflective surface (71 c, 73c) and reflecting light incident from inside of each of the first and second guide members (71, 75).

7. The backlight unit as claimed in claim 5, wherein an angle (θ₂) between the rear reflective surface (73c, 77c) and the light exit surface (71 b, 75b) is substantially 21 °.

8. The backlight unit as claimed in claim 1, further wherein
the guide portion (170, 270) is integrally formed with the light incident portion (165, 265) via a connection portion (165c, 265c) between the first and second light incident surfaces (165a, 165b; 265a, 265b) of the light incident portion (165, 265).

9. The backlight unit as claimed in claim 8, wherein an angle (θ₃) between a segment (B) extended from a side surface of the light guide panel (160) where the light incident portion (165) is formed and each of the first and second light incident surfaces (165a, 165b) of the light incident portion (165) is substantially 32°.

10. The backlight unit as claimed in claim 8, wherein the guide portion (170) comprises:
first and second light incident surfaces (171 a, 171 ab) on which the light emitted from the light source (150) is incident;
a reflective surface (173) converting a proceeding direction of an incident light to proceed toward the first or second light incident surface (165a, 165b) of the light incident portion (165); and
first and second light exit surfaces (175a, 175b) arranged to face the first and second light incident surfaces (165a, 165b) of the light incident portion (165) by being separated a predetermined distance equivalent to a width of the air gap (180) from each other, reflecting light directly incident from the first or second light incident surface (171 a, 171 b) of the guide portion (170), and outputting light incident via the reflective surface (173) toward the light incident portion (165).

11. The backlight unit as claimed in claim 10, wherein the reflective surface (173) comprises:
upper and lower reflective surfaces (173a, 173b) arranged to be separated a predetermined distance from each other and face each other; and
first and second rear reflective surfaces (173c, 173d) arranged to be inclined with respect to each of the first and second light exit surfaces (175a, 175b).

12. The backlight unit as claimed in claim 11, further comprising first and second reflective members (191, 195) formed on outer sides of the first and second rear reflective surfaces (173c, 173d) and reflecting light incident from inside of the guide portion (170).

13. The backlight unit as claimed in claim 11, wherein an angle (θ₄) between the first rear reflective surface (173c) and the first light exit surface (175a), and the second rear reflective surface (173d) and the second light exit surface (175b), is substantially 19°.

14. The backlight unit as claimed in claim 8, further comprising:
first and second reflective members (291, 295), each having a first reflective portion (291 a, 295a) formed on an outer side of the guide portion (270) and a second reflective portion (291 b, 295b) disposed on an outer side of a gap (280) between each of the first and second light incident surfaces (265a, 265b) and the guide portion (270).

15. The backlight unit as claimed in claim 14, wherein an angle (θ₅) between a segment (C) extended from a side surface of the light guide panel (260) where the light incident portion (265) is formed and each of the first and second light incident surfaces (265a, 265b) of the light incident portion (265) is substantially 20°.

16. The backlight unit as claimed in claim 14, wherein an angle (θ₈) between a segment (E) orthogonal to a segment (C) extended from a side surface of the light guide panel (260) where the light incident portion (265) is formed and the second reflective portions (291 b, 295b) is substantially 24°.

17. The backlight unit as claimed in claim 14, wherein the guide portion (270) comprises:
first and second light incident surfaces (271 a. 271 b) on which the light emitted from the light source (250) is incident;
a reflective surface (273) converting a proceeding direction of an incident light to proceed toward the first or second light incident surface (265a, 265b) of the light incident portion (265);
first and second light exit surfaces (275a, 275b) arranged to face the first and second light incident surfaces (265a, 265b) of the light incident portion (265), respectively, by being separated a predetermined distance reflecting light directly incident from the first and second light incident surfaces (271 a, 271 b), and outputting light incident via the reflective surface (273) toward the light incident portion (265); and
first and second support surfaces (277a, 277b) arranged parallel to the first and second light incident surfaces (271 a, 271 b) of the guide portion (270), respectively, and connecting an end portion of each of the first and second light incident surfaces (265a, 265b) of the light incident portion (265) and an end portion of each of the first and second light exit surfaces (275a, 275b).

18. The backlight unit as claimed in claim 17, wherein the reflective surface (273) comprises:
upper and lower reflective surfaces (273a, 273b) arranged to be separated a predetermined distance from each other and face each other; and
first and second rear reflective surfaces (273c, 273d) arranged to be inclined with respect to each of the first and second light exit surfaces (275a, 275b).

19. The backlight unit as claimed in claim 18, wherein an angle (θ₆) between the first rear reflective surface (273c) and the first light exit surface (275a), and the second rear reflective surface (273d) and the second light exit surface (275b), is substantially 22°.

20. The backlight unit as claimed in claim 17, wherein an angle between the first light incident surface (271 a) of the guide portion (270) and the second light incident surface (271 b) is substantially 84°.
